# NEUE EUROPÄISCHE PATENTSCHRIFT

(11) **EP 3 347 234 B2**
(45) Veröffentlichungstag und Bekanntmachung des Hinweises auf die Entscheidung über den Einspruch: **24.06.2026**
(45) Hinweis auf die Patenterteilung: 04.11.2020
(21) Anmeldenummer: 16763053.2
(22) Anmeldetag: 09.09.2016
(51) Int. Cl.: B60N 2/28

(54) **KINDERSITZ ZUR ANBRINGUNG AUF EINEM KRAFTFAHRZEUGSITZ**
CHILD SEAT FOR MOUNTING ON A SEAT OF AN AUTOMOTIVE VEHICLE
SIEGE D'ENFANT A MONTER SUR UN SIEGE DE VEHICULE AUTOMOBILE

(30) Priorität: 09.09.2015 DE 202015104792 U
(43) Veröffentlichungstag der Anmeldung: 18.07.2018
(60) Teilanmeldung: 20184639.1
(73) Patentinhaber: CYBEX GmbH, 95448 Bayreuth (DE)
(72) Erfinder: POS, Martin, 95444 Bayreuth (DE)
(74) Vertreter: Meissner Bolte Partnerschaft mbB
(86) Internationale Anmeldenummer: PCT/EP2016/071298
(87) Internationale Veröffentlichungsnummer: WO 2017/042330

(56) Entgegenhaltungen:
- DE-U1- 202013 103 189
- FR-A1- 2 864 482

## Beschreibung

Die Erfindung betrifft einen Kindersitz zur Anbringung auf einem Kraftfahrzeugsitz gemäß Anspruch 1.

In diesem Zusammenhang sei angemerkt, dass im Rahmen dieser Erfindung der Begriff "Kindersitz" als Oberbegriff für (klassische) Kindersitze und Babyschalen zu verstehen ist. Somit sind für einen Kindersitz vorgesehene Merkmale im Rahmen dieser Erfindung grundsätzlich auch auf eine Babyschale anwendbar und umgekehrt, solange nichts Gegenteiliges erwähnt ist. Selbiges gilt für den Begriff "Kind", der ebenfalls als Oberbegriff für Kinder und Babys sowie Kleinkinder zu verstehen ist.

Ein Kindersitz ist beispielsweise aus WO 2013/189819 A1 bekannt. Dort ist auch (in Fig. 1) ein Stützbein gezeigt, über das der Kindersitz auf einem Untergrund (dem Fußraum) abgestützt werden kann. Weiterhin ist z.B. aus den Figuren 2, 3A, 3B der FR 2864 482 A1 ein Kindersitz zur Anbringung auf einem Kraftfahrzeugsitz bekannt, umfassend ein Sitzelement sowie mindestens ein Stützbein zum Abstützen des Kindersitzes an einem Untergrund, insbesondere Fußraum des Kraftfahrzeuges, wobei eine Anzeigevorrichtung vorgesehen ist, die ausgebildet ist, um einen Bodenkontakt des Stützbeins mit dem Untergrund, insbesondere Fußraum, anzuzeigen, wobei das Stützbein mindestens einen oberen teleskopartigen Abschnitt und einen unteren teleskopartigen Abschnitt aufweist, die zur Verlängerung und Verkürzung des Stützbeines gegeneinander verschieblich sing Ein weiterer Kindsitz ist z.B. aus der DE 20 2013 103 189 U1 bekannt.

Es ist Aufgabe der Erfindung, eine Anzeigemöglichkeit bereitzustellen, über die dem Benutzer angezeigt werden kann, wenn das Stützbein in Kontakt mit dem Boden ist, wobei die Anzeige vorzugsweise möglichst einfach und sicher erfolgen soll.

Diese Aufgabe wird durch einen Kindersitz gemäß Anspruch 1 gelöst.

Insbesondere wird die Aufgabe durch einen Kindersitz zur Anbringung an einem Kraftfahrzeugsitz gelöst, umfassend ein Sitzelement sowie mindestens ein Stützbein zum Abstützen des Kindersitzes an einem Untergrund, insbesondere Fußraum eines Kraftfahrzeuges, wobei eine Anzeigevorrichtung vorgesehen ist, die ausgebildet ist, um einen Bodenkontakt des Stützbeins mit dem Untergrund, insbesondere Fußraum, anzuzeigen, wobei das Stützbein mindestens einen oberen, teleskopartigen Abschnitt und mindestens einen unteren, teleskopartigen Abschnitt aufweist, die zur Verlängerung und Verkürzung des Stützbeines gegeneinander verschieblich sind, wobei zwischen dem unteren teleskopartigen Abschnitt und der Anzeigevorrichtung eine Wirkverbindung vorliegt, die derart ausgebildet ist, dass eine Verlagerung des unteren Abschnittes gegenüber dem oberen Abschnitt aufgrund eines Bodenkontaktes eines (unteren bzw. distalen) Stützbeinendes zu einem Auslösen der Anzeigevorrichtung führt.

Ein Kerngedanke der vorliegenden Erfindung liegt darin, im Hinblick auf die Anzeige der Bodenkontaktierung auszunutzen, dass erster Abschnitt und zweiter Abschnitt prinzipiell gegeneinander verschieblich sind und weiterhin auszunutzen, dass aufgrund eines Bodenkontaktes eine gewisse Kraft auf den unteren Abschnitt wirkt, über die eine Verschiebung des unteren Abschnitts gegenüber dem oberen Abschnitt ermöglicht werden kann. Insbesondere ist erfindungsgemäß also kein elektronischer Sensor notwendig, der an einem Fuß des Stützbeins angeordnet ist und eine Anzeigevorrichtung ansteuert, wofür eine vergleichsweise teure Elektronik notwendig wäre und außerdem eine Batterie, die ggf. ausgetauscht werden muss nach einer gewissen Zeitdauer. Durch die Wirkverbindung mit dem unteren Abschnitt des Stützbeins wird es außerdem ermöglicht, dass eine Betätigung klar definiert erfolgen kann (da die Relativbewegung zwischen oberen und unterem Abschnitt ausgenutzt wird), so dass eine Wackelbewegung oder ein Verkanten (wie beispielsweise bei einer Lösung, bei der ein verschiebliches Element in einem proximalen Endabschnitt des Stützbeines angeordnet ist) während des Auslösens der Anzeigevorrichtung vermieden oder zumindest reduziert wird.

Konkret ist die Wirkverbindung ausgebildet, um eine (Druck-)Kraft von dem unteren Abschnitt zu der Anzeigevorrichtung mechanisch zu übertragen. Im Allgemeinen handelt es sich bei der Wirkverbindung um eine mechanische (kraftübertragende) Wirkverbindung. Insbesondere kann auf eine elektrische Übertragung oder sonstige elektrische oder elektronische Komponenten vollständig verzichtet werden. Dies erhöht die Zuverlässigkeit der Anzeige der Bodenkontaktierung mit einfachen Mitteln.

In einer konkreten Ausführungsform umfasst die Wirkverbindung eine Stange. Diese Stange kann einen runden, elliptischen oder vieleckigen Querschnitt, z.B. rechteckigen Querschnitt, oder profilartigen Querschnitt, wie beispielsweise einen U-förmigen oder C-förmigen Querschnitt, aufweisen. Damit wird auf konstruktiv einfache Art und Weise eine Übertragung der Wirkung ermöglicht, was Kosten reduziert.

Die Wirkverbindung und/oder die Stange kann/können eine Länge aufweisen, die mindestens 60%, vorzugsweise mindesten 80 % der Länge des oberen Abschnittes ausmacht. Die Wirkverbindung und/oder die Stange kann/können eine Länge aufweisen von mindestens 10 cm, vorzugsweise mindesten 15 cm aufweisen.

Vorzugsweise ist eine Verriegelungseinrichtung zur Einstellung (bzw. Verriegelung) einer Relativposition zwischen oberen und unterem Abschnitt vorgesehen. Weiter vorzugsweise sind im verriegelten Zustand oberer und unterer Abschnitt um eine gewisse Wegstrecke, beispielsweise kleiner oder gleich 2 cm, bewegbar. Die Wegstrecke kann mindestens 3 mm betragen. Dadurch wird es ermöglicht, dass im verriegelten Zustand (in dem die Länge des Stützbeins, abgesehen von der eben genannten Wegstrecke, prinzipiell festgelegt ist) dennoch eine gewisse (vordefinierte) Relativbewegung zugelassen ist, so dass über die Wirkverbindung die Anzeigevorrichtung ausgelöst werden kann. Dadurch übernimmt die Verriegelungseinrichtung (zumindest teilweise) die Aufgabe einer Detektion der Bodenkontaktierung, was insgesamt zu einer einfachen und kostengünstigen, aber dennoch zuverlässigen, Struktur führt.

Die Verriegelungseinrichtung kann ein Langloch und/oder einen Raststift aufweisen, wobei der Raststift entweder (nur), nämlich in der verrasteten Stellung, innerhalb des Langlochs gleiten kann, oder derart betätigt ist, dass sich oberer und unterer Abschnitt frei, bis zu einer maximalen (bzw. minimalen) Einstell-Länge des Stützbeins, gegeneinander bewegen können. Das Langloch ist vorzugsweise in dem oberen Abschnitt vorgesehen.

Der Raststift ist in der verrasteten Stellung vorzugsweise so mit dem unteren Abschnitt verbunden, dass sich dieser gegenüber dem Raststift nicht bewegen kann. Insgesamt wird eine konstruktiv einfache Art und Weise geschaffen, um gleichzeitig eine Verrastung zwischen dem oberen und unteren Abschnitt durchführen zu können und eine einfache Anzeige der Bodenkontaktierung zu ermöglichen.

Weiterhin kann der Kindersitz eine Feder aufweisen, deren erstes Ende ortsfest an dem oberen Abschnitt (mittelbar oder unmittelbar) angebracht ist und deren zweites Ende ortsfest an der Wirkverbindung (mittelbar oder unmittelbar), insbesondere an dem Stab, angeordnet ist, derart, dass die Feder den oberen und unteren Abschnitt, im verrasteten Zustand, voneinander weg drängt. Vorzugsweise ist die Feder, im verrasteten Zustand, mittelbar über die Verriegelungseinrichtung (ggf. ausschließlich über die Verriegelungseinrichtung) mit dem unteren Abschnitt verbunden. Dadurch wird eine Grundstellung ermöglicht, die das Stützbein einnimmt, wenn keine Bodenkontaktierung vorliegt. Wenn jedoch eine Bodenkontaktierung vorliegt, dann wird durch den DruccKontakt mit dem Boden der untere Abschnitt gegen die Wirkung der Feder in Richtung des oberen Abschnittes gedrängt, so dass eine Anzeige der Bodenkontaktierung (über die Wirkverbindung) realisiert werden kann. Insgesamt handelt es sich hier um eine vergleichsweise einfache Struktur, die zuverlässig eine Bodenkontaktierung anzeigen lässt.

In einer konkreten Ausführungsform ist die Wirkverbindung, insbesondere Stange, im verrasteten Zustand, ortsfest mit dem unteren Abschnitt verbunden und beweglich gegenüber dem oberen Abschnitt. Auch diese Maßnahme erleichtert eine zuverlässige Anzeige der Bodenkontaktierung.

Die Wirkverbindung, insbesondere Stange, kann im entriegelten Zustand, in dem die Länge des Stützbeines eingestellt werden kann, sowohl gegenüber dem oberen Abschnitt als auch gegenüber dem unteren Abschnitt beweglich sein.

Insbesondere ist die Wirkverbindung (und/oder Stange) im entriegelten Zustand nur um die oben erwähnte (geringe) Wegstrecke gegenüber dem oberen Abschnitt bewegbar, jedoch frei gegenüber dem unteren Abschnitt bewegbar (nur begrenzt durch die maximal mögliche Verschiebung des oberen und des unteren Abschnittes gegeneinander, im entriegelten Zustand).

Vorzugsweise ist die Anzeigevorrichtung an einem proximalen Ende des Stützbeines angeordnet. Dadurch wird auf einfache Weise sichergestellt, dass der Benutzer die Anzeigevorrichtung einsehen kann.

Der obere Abschnitt umschließt den unteren Abschnitt im überlappenden Bereich.

Der obere Abschnitt und/oder der untere Abschnitt können durch ein Rohr (oder Profil, beispielsweise C- oder U-Profil) ausgebildet werden. Der obere Abschnitt ist vorzugsweise ein äußeres Rohr (oder äußeres C- oder U-Profil). Der untere Abschnitt ist vorzugsweise ein inneres Rohr (oder inneres Profil, insbesondere C-Profil oder U-Profil). Dadurch kann die Einstellung der Länge des Stützbeins vereinfacht werden.

Weitere Ausführungsformen der Erfindung ergeben sich aus den Unteransprüchen.

Abgesehen von dem Stützbein kann der Kindersitz, wie in WO 2013/189819 beschrieben, ausgebildet sein.

Nachfolgend wird die Erfindung anhand eines Ausführungsbeispiels beschrieben, das anhand der Abbildungen näher erläutert wird. Hierbei zeigen:
Fig. 1 einen Ausschnitt des Stützbeins in einem schematischen Schnitt, in einem verriegelten Zustand;
Fig. 2 einen Schnitt gemäß Fig. 1 nach einer Bodenkontaktierung; und
Fig. 3 einen erfindungsgemäßen Kindersitz in einer Seitenansicht.

In der nachfolgenden Beschreibung werden für gleiche und gleichwirkende Teile dieselben Bezugsziffern verwendet.

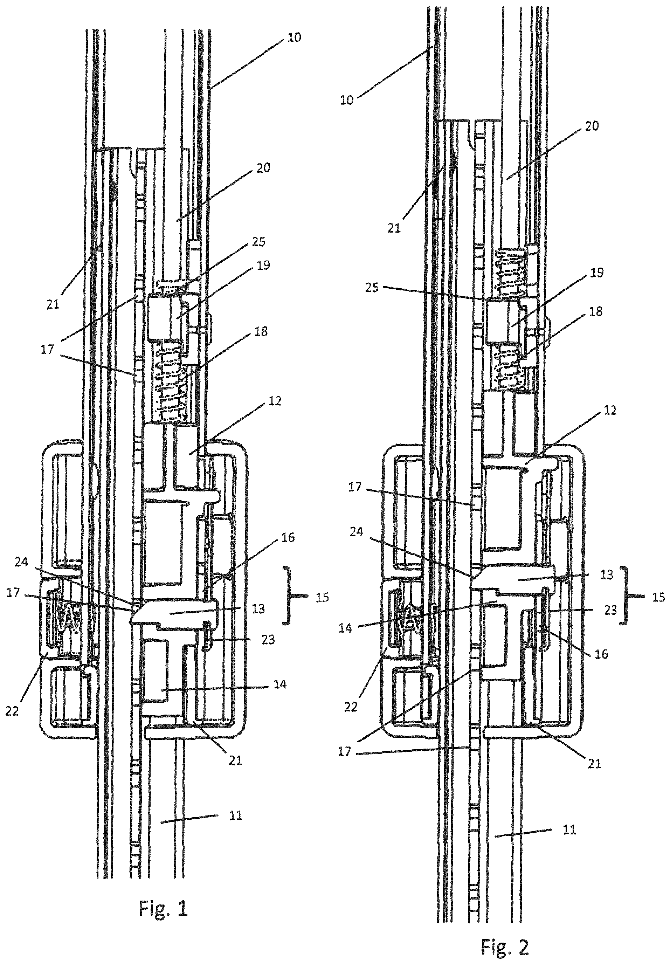

Fig. 1 zeigt einen Ausschnitt eines Stützbeines mit einem oberen Abschnitt 10 und einem unteren Abschnitt 11. Der obere Abschnitt 10 ist einer (nicht gezeigten) Sitzfläche des Kindersitzes näher. Der untere Abschnitt 11 ist einem (nicht gezeigten) Fuß des Stützbeines näher.

Das teleskopartige Stützbein umfasst im vorliegenden Fall genau die zwei Abschnitte 10, 11, die gegeneinander teleskopartig verschieblich sind. Es ist jedoch nicht ausgeschlossen, dass weitere (ggf. teleskopartig verschiebliche) Abschnitte vorgesehen sind.

Der untere Abschnitt 11 ist innerhalb des oberen Abschnittes 10 (in einem Überlappungsbereich) geführt.

Eine Verriegelungseinrichtung 12 umfasst ein Basisteil 14 und einen Raststift 13. Im in den Fig. 1 und 2 verriegelten Zustand des Stützbeins (jedoch auch grundsätzlich im entriegelten Zustand) kann sich die Verriegelungseinrichtung 12 gegenüber dem oberen Abschnitt 10 bewegen und zwar um eine Strecke 15, die durch eine Ausnehmung (Langloch) 16 definiert ist. In dem in den Fig. 1 und 2 verriegelten Zustand greift der Raststift 13 formschlüssig in eine Ausnehmung 17 (einer Vielzahl von Ausnehmungen 17) des unteren Abschnittes ein, so dass sich der untere Abschnitt 11 nicht gegenüber der Verriegelungseinrichtung bewegen kann. Eine Feder 18 bewirkt, dass in einem unbelasteten Zustand des Stützbeines (gemäß Fig. 1) die Verriegelungseinrichtung 12 zusammen mit dem unteren Abschnitt 11 nach unten gedrängt wird. In diesem Zusammenhang sei angemerkt, dass die Feder 18 gemäß den Fig. 1 und 2 rein schematisch abgebildet ist und insbesondere das (in Fig. 1 und 2) obere Ende der Feder 18 gegenüber einem Anschlag 19 gleich positioniert ist. Mit anderen Worten wirkt die Feder 18 zwischen dem ortsfest an dem oberen Abschnitt 10 angebrachten Anschlag 19 und der Verriegelungseinrichtung 12. Ein oberes Ende der Feder kann beispielsweise (innen) an einem oberen Ende 25 des Anschlags 19 anliegen (sowohl in Figur 1 als auch in Figur 2). Der Anschlag 19 ist ortsfest mit dem oberen Abschnitt verbunden.

Wenn nun eine Bodenkontaktierung des Stützbeines stattfindet, resultiert daraus eine (Druck-)Kraft, die den unteren Abschnitt bzw. die Verriegelungseinrichtung 12 entgegen der Federkraft nach oben drückt, so dass die Position in Fig. 2 erreicht wird.

Die Verriegelungseinrichtung 12 ist mit einer Stange 20 verbunden, deren (in Fig. 1 und 2 nicht gezeigtes) oberes Ende wiederum mit einer Anzeigevorrichtung (mittelbar oder unmittelbar) verbunden ist, oder selbst eine Anzeigevorrichtung ausbildet. Beispielsweise ist es denkbar, dass ein oberes Ende der Stange 20 aus einer Öffnung herausragt (wenn die Stellung gemäß Fig. 2 vorliegt) oder innerhalb einer Öffnung verschwindet (wenn die Stellung gemäß Fig. 1 vorliegt). Alternativ ist es auch möglich, dass ein oberes Ende der Stange 20 eine mechanische Anzeigevorrichtung in eine erste Position verbringt, wenn die Stellung gemäß Fig. 2 vorliegt und in eine zweite Position, die vorliegt, wenn die Position gemäß Fig. 1 vorliegt. Beispielsweise könnte die Anzeigevorrichtung dann eine grüne Fläche sichtbar machen, wenn eine Bodenkontaktierung gemäß Fig. 2 vorliegt oder eine rote Fläche, wenn eine solche Bodenkontaktierung nicht vorliegt.

Führungsteile 21 ermöglichen eine effiziente Führung des unteren Abschnitts 11 innerhalb des oberen Abschnittes 10. Dabei wird auch der weite Abstand dieser Führungsteile voneinander ausgenutzt, um einerseits eine zuverlässige Verstellung der Beinlänge zu ermöglichen und andererseits zuverlässig eine Bodenkontaktierung anzeigen zu können. Ein Wackeln oder Verkanten wird dadurch vermieden (oder zumindest minimiert), wenn die Anzeigevorrichtung ausgelöst wird.

Der Raststift 13 ist so verlagerbar, dass er entweder nur mit der Ausnehmung 16 in Eingriff gebracht ist (entriegelte Stellung) oder (wie in Fig. 1 und 2 gezeigt) sowohl mit der Ausnehmung 16 des oberen Abschnittes 10 in Verbindung steht, als auch in eine der Ausnehmungen 17 des unteren Abschnitts 11 eingebracht ist. Zur entsprechenden Verlagerung des Raststiftes 13 können dazu übliche Einrichtungen vorgesehen sein (die im vorliegenden Fall nicht im Detail erkennbar sind). Beispielsweise kann dazu ein (ggf. federbelasteter) Betätigungsknopf 22 und/oder eine Zugeinrichtung, die durch das Bezugszeichen 23 angedeutet ist und ggf. den Raststift durch Ziehen, beispielsweis aufgrund einer (z.B. durch den Betätigungsknopf durchgeführten Verlagerung), in die entriegelte Stellung bringt, und/oder eine Geometrie des Raststiftes 13, beispielsweise eine Schrägfläche 24 beitragen.

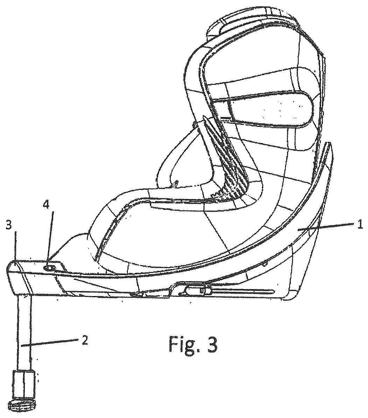

In Fig. 3 ist der gesamte Kindesitz, umfassend ein Sitzelement 1 (umfassend eine Basis und eine Sitzschale) sowie ein Stützbein 2, gezeigt. Eine mögliche Anzeigevorrichtung ist schematisch durch das Bezugszeichen 3 angedeutet. Zusätzlich oder alternativ kann die Anzeigevorrichtung auch beim Bezugszeichen 4 lokalisiert sein.

### Bezugszeichen

- 1: Sitzelement
- 2: Stützbein
- 3: Anzeigevorrichtung
- 4: Anzeigevorrichtung
- 10: oberer Abschnitt
- 11: unterer Abschnitt
- 12: Verriegelungseinrichtung
- 13: Raststift
- 14: Basisteil
- 15: Strecke
- 16: Ausnehmung
- 17: Ausnehmung
- 18: Feder
- 19: Anschlag
- 20: Stange
- 21: Führungsteil
- 22: Betätigungsknopf
- 23: Zugeinrichtung
- 24: Schrägfläche
- 25: oberes Ende

## Patentansprüche

1. Kindersitz zur Anbringung auf einem Kraftfahrzeugsitz, umfassend ein Sitzelement (1) sowie mindestens ein Stützbein (2) zum Abstützen des Kindersitzes an einem Untergrund, insbesondere Fußraum des Kraftfahrzeuges, wobei eine Anzeigevorrichtung (3) vorgesehen ist, die ausgebildet ist, um einen Bodenkontakt des Stützbeins mit dem Untergrund, insbesondere Fußraum, anzuzeigen, wobei das Stützbein (2) mindestens einen oberen teleskopartigen Abschnitt (10) und einen unteren teleskopartigen Abschnitt (11) aufweist, die zur Verlängerung und Verkürzung des Stützbeines gegeneinander verschieblich sind, wobei zwischen dem unteren teleskopartigen Abschnitt (11) und der Anzeigevorrichtung eine Wirkverbindung (12, 20) vorliegt, die derart ausgebildet ist, dass eine Verlagerung des unteren Abschnitts (11) gegenüber dem oberen Abschnitt (10) aufgrund eines Bodenkontaktes eines Stützbeinendes zu einem Auslösen der Anzeigevorrichtung führt, wobei der obere Abschnitt den unteren Abschnitt in einem überlappenden Bereich umschließt.

2. Kindersitz nach Anspruch 1,
**dadurch gekennzeichnet, dass**
die Wirkverbindung ausgebildet ist, um eine Kraft von dem unteren Abschnitt (11) zu der Anzeigevorrichtung mechanisch zu übertragen.

3. Kindersitz nach Anspruch 1 oder 2,
**dadurch gekennzeichnet, dass**
die Wirkverbindung eine Stange (20) und/oder, zumindest abschnittsweise, eine Verriegelungseinrichtung (12) umfasst.

4. Kindersitz nach einem der vorhergehenden Ansprüche,
**dadurch gekennzeichnet, dass**
eine Verriegelungseinrichtung (12) zur Einstellung einer Relativposition zwischen oberem (10) und unterem (11) Abschnitt vorgesehen ist, wobei oberer (10) und unterer (11) Abschnitt im verriegelten Zustand um eine gewisse Wegstrecke, beispielsweise kleiner gleich 2 cm bewegbar sind.

5. Kindersitz nach Anspruch 3 oder 4,
**dadurch gekennzeichnet, dass**
die Verriegelungseinrichtung mit einer Ausnehmung (16), insbesondere Langloch, zusammenwirkt und vorzugsweise einen Raststift aufweist.

6. Kindersitz nach Anspruch 5,
**dadurch gekennzeichnet, dass**
der Raststift in der verrasteten Stellung innerhalb der Ausnehmung (16), insbesondere des Langlochs, gleiten kann.

7. Kindersitz nach Anspruch 5 oder 6,
**dadurch gekennzeichnet, dass**
der Raststift derart betätigbar ist, dass sich oberer (10) und unterer (11) Abschnitt frei, bis zu einer vorbestimmten maximalen Länge des Stützbeines, gegeneinander bewegen können.

8. Kindersitz nach einem der vorhergehenden Ansprüche,
**dadurch gekennzeichnet, dass**
eine Feder (18) vorgesehen ist, deren erstes Ende ortsfest an dem oberen Abschnitt (10) angebracht ist und deren zweites Ende ortsfest an der Wirkverbindung, insbesondere der Stange, angeordnet ist derart, dass die Feder den oberen (10) und unteren (11) Abschnitt, im verrasteten Zustand, voneinander weg drängt.

9. Kindersitz nach einem der vorhergehenden Ansprüche,
**dadurch gekennzeichnet, dass**
die Wirkverbindung, insbesondere die Stange (20), im verrasteten Zustand, ortsfest mit dem unteren Abschnitt (11) verbunden ist und beweglich gegenüber dem oberen Abschnitt (10) ist.

10. Kindersitz nach einem der vorhergehenden Ansprüche,
**dadurch gekennzeichnet, dass**
die Wirkverbindung, insbesondere Stange (20), im entriegelten Zustand, in dem die Länge des Stützbeins eingestellt werden kann, sowohl gegenüber dem oberen Abschnitt (10) als auch gegenüber dem unteren Abschnitt (11) beweglich ist.

11. Kindersitz nach einem der vorhergehenden Ansprüche,
**dadurch gekennzeichnet, dass**
die Anzeigevorrichtung (3) an einem proximalen Ende des Stützbeines angeordnet ist.

12. Kindersitz nach einem der vorhergehenden Ansprüche,
**dadurch gekennzeichnet, dass**
der obere (10) und/oder der untere (11) Abschnitt durch ein Rohr oder ein Profil, beispielsweise C-Profil oder U-Profil ausgebildet wird/werden, wobei der obere Abschnitt vorzugsweise ein äußeres Rohr oder äußeres Profil, insbesondere äußeres U-Profil oder C-Profil, ausbildet und der untere Abschnitt vorzugsweise ein inneres Rohr oder inneres Profil, insbesondere inneres U-Profil oder C-Profil, ausbildet.

## Claims

1. Child seat for attachment to a motor vehicle seat, comprising a seat element (1) and at least one support leg (2) for supporting the child seat on an underlying surface, in particular a foot well of the motor vehicle, wherein an indicator device (3) is provided, which is designed to indicate a ground contact of the support leg with the underlying surface, in particular the foot well, wherein the support leg (2) has at least one upper telescopic section (10) and one lower telescopic section (11), which are displaceable in relation to one another to lengthen and shorten the support leg, wherein an operational connection (12, 20) is present between the lower telescopic section (11) and the indicator device, which is designed such that a displacement of the lower section (11) in relation to the upper section (10) due to a ground contact of a support leg end results in triggering of the indicator device, wherein the upper section surrounds the lower section in an overlapping area.

2. Child seat as claimed in claim 1,
**characterized in that**
the operational connection is designed to mechanically transmit a force from the lower section (11) to the indicator device.

3. Child seat as claimed in claim 1 or 2,
**characterized in that**
the operational connection comprises a rod (20) and/or, at least in some sections, a locking unit (12).

4. Child seat as claimed in any one of the preceding claims,
**characterized in that**
a locking unit (12) is provided for setting a relative position between upper (10) and lower (11) section, wherein upper (10) and lower (11) section are movable in the locked state by a certain distance, for example, less than or equal to 2 cm.

5. Child seat as claimed in claim 3 or 4,
**characterized in that**
the locking unit interacts with a recess (16), in particular an elongated hole, and preferably has a detent pin.

6. Child seat as claimed in claim 5,
**characterized in that**
the detent pin can slide within the recess (16), in particular the elongated hole, in the locked position.

7. Child seat as claimed in claim 5 or 6,
**characterized in that**
the detent pin is operable such that upper (10) and lower (11) section can move freely in relation to one another up to a predetermined maximum length of the support leg.

8. Child seat as claimed in any one of the preceding claims,
**characterized in that**
a spring (18) is provided, the first end of which is attached fixed in place on the upper section (10) and the second end of which is arranged fixed in place on the operational connection, in particular the rod, such that the spring presses the upper (10) and lower (11) section away from one another in the locked state.

9. Child seat as claimed in any one of the preceding claims,
**characterized in that**
the operational connection, in particular the rod (20), in the locked state, is connected fixed in place to the lower section (11) and is movable in relation to the upper section (10).

10. Child seat as claimed in any one of the preceding claims,
**characterized in that**
the operational connection, in particular the rod (20) in the unlocked state, in which the length of the support leg can be set, is movable both in relation to the upper section (10) and in relation to the lower section (11).

11. Child seat as claimed in any one of the preceding claims,
**characterized in that**
the indicator device (3) is arranged at a proximal end of the support leg.

12. Child seat as claimed in any one of the preceding claims,
**characterized in that**
the upper (10) and/or the lower (11) section is/are formed by a tube or a profile, for example, a C-profile or U-profile, wherein the upper section preferably forms an outer tube or outer profile, in particular an outer U-profile or C-profile, and the lower section preferably forms an inner tube or inner profile, in particular an inner U-profile or C-profile.

## Revendications

1. Siège auto pour enfants à monter sur un siège de véhicule à moteur, comprenant un élément de siège (1) et au moins une béquille d'appui (2) destinée à soutenir le siège auto pour enfants sur un support, en particulier un plancher du véhicule à moteur, dans lequel est prévu un dispositif indicateur (3) conçu pour signaler un contact de la béquille d'appui au niveau du support, en particulier du plancher, dans lequel la béquille d'appui (2) comporte au moins un segment télescopique supérieur (10) et un segment télescopique inférieur (11), qui peuvent coulisser l'un par rapport à l'autre pour allonger et raccourcir la béquille d'appui, dans lequel est établie entre le segment télescopique inférieur (11) et le dispositif indicateur une liaison active (12, 20) conçue de telle manière qu'un déplacement du segment inférieur (11) par rapport au segment supérieur (10) à la suite d'un contact avec le plancher d'une extrémité de la béquille d'appui provoque le déclenchement du dispositif indicateur, le segment supérieur entourant le segment inférieur dans une zone de chevauchement.

2. Siège auto pour enfants selon la revendication 1, **caractérisé en ce que** la liaison active est conçue pour transmettre mécaniquement une force du segment inférieur (11) au dispositif indicateur.

3. Siège auto pour enfants selon la revendication 1 ou 2, **caractérisé en ce que** la liaison active comprend une tringle (20) et/ou, au moins pour certaines parties, un dispositif de verrouillage (12).

4. Siège auto pour enfants selon l'une des revendications précédentes, **caractérisé en ce qu'**un dispositif de verrouillage (12) est prévu pour l'ajustement d'une position relative entre le segment supérieur (10) et le segment inférieur (11), le segment supérieur (10) et le segment inférieur (11) pouvant, dans l'état verrouillé, être déplacés sur une certaine distance, par exemple inférieure ou égale à 2 cm.

5. Siège auto pour enfants selon la revendication 3 ou 4, **caractérisé en ce que** le dispositif de verrouillage coopère avec un creux (16), en particulier un trou oblong, et comporte de préférence une goupille d'enclenchement.

6. Siège auto pour enfants selon la revendication 5, **caractérisé en ce que** la goupille d'enclenchement peut, dans l'état enclenché, glisser à l'intérieur du creux (16), en particulier du trou oblong.

7. Siège auto pour enfants selon la revendication 5 ou 6, **caractérisé en ce que** la goupille d'enclenchement peut être actionnée de telle façon que le segment supérieur (10) et le segment inférieur (11) peuvent se déplacer librement l'un par rapport à l'autre jusqu'à une longueur maximale prédéterminée de la béquille d'appui.

8. Siège auto pour enfants selon l'une des revendications précédentes, **caractérisé en ce qu'**est prévu un ressort (18) dont la première extrémité est placée de façon fixe sur le segment supérieur (10) et dont la deuxième extrémité est disposée de façon fixe sur la liaison active, en particulier la tringle, de telle sorte que le ressort écarte le segment supérieur (10) et le segment inférieur (11) l'un de l'autre dans l'état enclenché.

9. Siège auto pour enfants selon l'une des revendications précédentes, **caractérisé en ce que** la liaison active, en particulier la tringle (20), dans l'état enclenché, est reliée de manière fixe au segment inférieur (11) et capable de mouvement par rapport au segment supérieur (10).

10. Siège auto pour enfants selon l'une des revendications précédentes, **caractérisé en ce que** la liaison active, en particulier la tringle (20), dans l'état déverrouillé dans lequel la longueur de la béquille d'appui peut être ajustée, est mobile aussi bien vis-à-vis du segment supérieur (10) que vis-à-vis du segment inférieur (11).

11. Siège auto pour enfants selon l'une des revendications précédentes, **caractérisé en ce que** le dispositif indicateur (3) est disposé à une extrémité proximale de la béquille d'appui.

12. Siège auto pour enfants selon l'une des revendications précédentes, **caractérisé en ce que** le segment supérieur (10) et/ou le segment inférieur (11) est formé/sont formés par un tube ou un profilé, par exemple un profilé en C ou un profilé en U, le segment supérieur formant en particulier un tube extérieur ou un profilé extérieur, en particulier un profilé en U ou profilé en C extérieur, et le segment inférieur forme de préférence un tube intérieur ou un profilé intérieur, en particulier un profilé en U ou un profilé en C intérieur.
